(19) Europäisches Patentamt
European Patent Office
Office européen des brevets

(11) **EP 4 129 927 A1**

(12) **EUROPEAN PATENT APPLICATION**
published in accordance with Art. 153(4) EPC

(43) Date of publication:
**08.02.2023 Bulletin 2023/06**

(21) Application number: **21911586.2**

(22) Date of filing: **23.12.2021**

(51) International Patent Classification (IPC):
**C01G 53/00** (1968.09)          **H01M 4/525** (2010.01)
**H01M 4/505** (2010.01)

(52) Cooperative Patent Classification (CPC):
**C01G 53/00; H01M 4/505; H01M 4/525**

(86) International application number:
**PCT/KR2021/019764**

(87) International publication number:
**WO 2022/139521 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2020 KR 20200181553**

(71) Applicant: **LG Energy Solution, Ltd.**
**Seoul 07335 (KR)**

(72) Inventors:
• **LEE, Dae Jin**
  **Daejeon 34122 (KR)**
• **PARK, Sang Min**
  **Daejeon 34122 (KR)**

• **KWAK, Min**
  **Daejeon 34122 (KR)**
• **JUNG, Wang Mo**
  **Daejeon 34122 (KR)**
• **HAN, Gi Beom**
  **Daejeon 34122 (KR)**
• **LEE, Sang Wook**
  **Daejeon 34122 (KR)**
• **LHO, Eun Sol**
  **Daejeon 34122 (KR)**
• **DO, Joong Yeop**
  **Daejeon 34122 (KR)**
• **PARK, Kang Joon**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING POSITIVE ELECTRODE ACTIVE MATERIAL**

(57) The present invention relates to a method of preparing a positive electrode active material which may ensure surface uniformity and coating uniformity of first and second lithium transition metal oxides included in the positive electrode active material and may improve productivity, wherein the present invention relates to a method of preparing a positive electrode active material which includes a step of (A) mixing a first lithium transition metal oxide having a first Brunauer-Emmett-Teller (BET) specific surface area and a second lithium transition metal oxide having a second BET specific surface area to prepare a mixture and washing the mixture with a washing solution, wherein an amount (parts by weight) of the washing solution based on 100 parts by weight of the mixture satisfies Equation 1 described in the present specification.

[FIG.1]

**Description**

<u>**TECHNICAL FIELD**</u>

<u>**Cross-reference to Related Applications**</u>

This application claims priority from Korean Patent Application No.10-2020-0181553, filed on December 23, 2020, the disclosure of which is incorporated by reference herein.

<u>**Technical Field**</u>

The present invention relates to a method of preparing a positive electrode active material.

<u>**BACKGROUND ART**</u>

Demand for secondary batteries as an energy source has been significantly increased as technology development and demand with respect to mobile devices and electric vehicles have increased. Among these secondary batteries, lithium secondary batteries having high energy density, high voltage, long cycle life, and low self-discharging rate have beencommercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, the $LiCoO_2$ has very poor thermal properties due to an unstable crystal structure caused by delithiation. Also, since the $LiCoO_2$ is expensive, there is a limitation in using a large amount of the $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, a lithium transition metal oxide, in which a portion of nickel (Ni) is substituted with cobalt (Co), manganese (Mn), or aluminum (Al), has been developed.

However, the lithium composite transition metal oxide has a limitationin that capacity is low. Thus, in order to increase the capacity of the lithium composite transition metal oxide, a method of increasing an amount of the nickel or increasing packing density per unit volume of the positive electrode active material has been studied.

Recently, in order to prepare a high-density positive electrode active material having high packing density per unit volume, two types of positive electrode active materials having different compositions or average particle diameters ($D_{50}$) are mixed and used. That is, after the two types of the positive electrode active materials having different compositions or average particle diameters ($D_{50}$) are completely separately prepared, they are mixed and used. In this case, since the two types of the positive electrode active materials are separately prepared, there is a loss in terms of cost and time. In addition, since there is a difference in physical properties, such as surface uniformity, between the two types of the positive electrode active materials, in some cases a problem occurs in a process after the mixing of the two types of the positive electrode active materials.

Therefore, there is a need for a method of preparing two types of positive electrode active materials which may improve productivity and may ensure surface uniformity and coating uniformity of the positive electrode active material.

<u>**DISCLOSURE OF THE INVENTION**</u>

<u>**TECHNICAL PROBLEM**</u>

An aspect of the present invention provides a method of preparing a positive electrode active material which may ensure surface uniformity and coating uniformity of first and second lithium transition metal oxides included in the positive electrode active material and may improve productivity by mixing the first lithium transition metal oxide having a first Brunauer-Emmett-Teller (BET) specific surface area and the second lithium transition metal oxide having a second BET specific surface area without washing each of the first and second lithium transition metal oxides and then simultaneously washing the first and second lithium transition metal oxides with a specific amount, which is related to the first BET specific surface area and the second BET specific surface area, of a washing solution.

**TECHNICAL SOLUTION**

According to an aspect of the present invention,there is provided amethod of preparing a positive electrode active material which includes a step of:(A) mixing a first lithium transition metal oxide having a first BET specific surface area and a second lithium transition metal oxide having a second BET specific surface area to prepare a mixture and washing the mixture with a washing solution, wherein an amount (parts by weight) of the washing solution based on 100 parts by weight of the mixture satisfies Equation 1.

[Equation 1]

5,000 × (x1w1 + x2w2) ≤ the amount of the washing

solution ≤ 15,000 × (x1w1 + x2w2)

In Equation 1,

x1 is the first BET specific surface area ($m^2/g$), and w1 is a weight ratio of the first lithium transition metal oxide based on a total weight of the mixture, and
x2 is the second BET specific surface area ($m^2/g$), and w2 is a weight ratio of the first lithium transition metal oxide based on the total weight of the mixture.

**ADVANTAGEOUS EFFECTS**

The present invention may provide a method of preparing a positive electrode active material which may ensure surface uniformity and coating uniformity of first and second lithium transition metal oxides included in the positive electrode active material and may improve productivity.

**BRIEF DESCRIPTION OF THE DRAWINGS**

FIG. 1 is transmission electron microscope (TEM)-energy dispersive X-ray spectroscopy (EDS) mapping data of a positive electrode active material of Example 1; and
FIG. 2 is low-temperature output evaluation data of batteries respectively including positive electrode active materials of Examples 1 and 2 and Comparative Examples 1 and 2.

**MODE FOR CARRYING OUT THE INVENTION**

Hereinafter, the present invention will be described in more detail.
It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.
In the present specification, the expression 'average particle diameter ($D_{50}$)' may be defined as a particle diameter at a cumulative volume of 50% in a particle size distribution curve. The average particle diameter ($D_{50}$), for example, may be measured by using a laser diffraction method. For example, in a method of measuring the average particle diameter ($D_{50}$) of the positive electrode active material,after particles of the positive electrode active materialare dispersed in a dispersion medium, the dispersion medium is introduced into a commercial laser diffraction particle size measurement instrument (e.g., MicrotracS3500) and irradiated with ultrasonic waves having a frequency of about 28 kHz and an output of 60 W, and the average particle diameter ($D_{50}$) at the cumulative volume of 50% may then be calculated by the measurement instrument.

**Method of Preparing Positive Electrode Active Material**

First, a method of preparing a positive electrode active material according to the present invention will be described.

The method of preparing a positive electrode active material according to the present invention includes a step of (A) mixing a first lithium transition metal oxide having a first BET specific surface area and a second lithium transition metal oxide having a second BET specific surface area to prepare a mixture and washing the mixture with a washing solution. An amount (parts by weight) of the washing solution based on 100 parts by weight of the mixture satisfies Equation 1 below. The Brunauer-Emmett-Teller (BET)specific surface area may be measured by a method well known in the art, and, for example, may be measured using Microactive ASAP2460 or Macsorb Model-1201. Specifically, the BET specific surface area in the present invention is a nitrogen adsorption specific surface area ($m^2$/g), wherein a specific surface area of a target material may be measured by degassing at 200°C for 8 hours and performing $N^2$ adsorption/desorption at 77K using a BET measurement instrument(BEL-SORPMAX, Nippon Bell).

The method of preparing a positive electrode active materialmay further include a step of (B) separating the mixture from the washing solution and drying the mixture, andmay further include a step of(C) mixing a coating element-containing raw material with the mixture subjected to the washing and performing a heat treatment to form a coating layer.

The present inventors have found that, when a positive electrode active material including first and second lithium transition metal oxides is prepared, productivity may be improved by mixing the first and second lithium transition metal oxides and then simultaneously washing the first and second lithium transition metal oxides, and, in a case in which an amount of the washing solution used in the washing is a specific amount related to the BET specific surface area of the first lithium transition metal oxide and the BET specific surface area of the second lithium transition metal oxide, since surface uniformity of the first and second lithium transition metal oxides included in the prepared positive electrode active material may be ensured, performance (high-temperature capacity characteristics, high-temperature resistance characteristics, low-temperature output characteristics, etc.) of a battery including the positive electrode active material prepared according to the present invention may be improved, thereby leading to the completion of the present invention.

Hereinafter, each step of the present invention will be described in detail.

**Step (A)**

Step (A) is a step of mixing a first lithium transition metal oxide having a first BET specific surface area and a second lithium transition metal oxide having a second BET specific surface area to prepare a mixture and washing the mixture with a washing solution. The washing is a process of removing residual lithium, as an impurity, with the washing solution.

According to the present invention, a difference between the first BET specific surface area and the second BET specific surface area may be 0.5 $m^2$/g or less, particularly0.4 $m^2$/g or less, and more particularly 0.3 $m^2$/g or less.In this case, since the washing is uniformly performed when the first transition metal oxide and the second transition metal oxide are mixed and simultaneously washed, surface uniformity of the prepared positive electrode active material may be ensured, and, as a result, a battery having improved performance (high-temperature capacity characteristics, high-temperature resistance characteristics, low-temperature output characteristics, etc.) may be achieved. As a reference, in a case in which the difference between the first BET specific surface area and the second BET specific surface area is large, since a surface of the lithium transition metal oxide having a small BET specific surface area is excessively cleaned when the first transition metal oxide and the second transition metal oxide are mixed and simultaneously washed, a surface structure may be changed and impurities on a surface of the lithium transition metal oxide having a large BET specific surface area are not removed, and thus, low-temperature output of the battery may be adversely affected.

The first lithium transition metal oxide and the second lithium transition metal oxide may have different average particle diameters ($D_{50}$).

The average particle diameter ($D_{50}$) of each of the first lithium transition metal oxide and the second lithium transition metal oxide may be in a range of 1 um to 15 um, particularly 3 um to 15 $\mu$m, and more particularly 3 um to 12 um. In a case in which the average particle diameter ($D_{50}$) of each of the first lithium transition metal oxide and the second lithium transition metal oxide is within the above range, safety of the battery, which includes the positive electrode active material including the first and second lithium transition metal oxides, may be improved.

The average particle diameter ($D_{50}$) of the first lithium transition metal oxide is larger than the average particle diameter ($D_{50}$) of the second lithium transition metal oxide, and a difference between the average particle diameter ($D_{50}$) of the first lithium transition metal oxide and the average particle diameter ($D_{50}$) of the second lithium transition metal oxide may be in a range of 3 um to 7 $\mu$m. In this case, since particles having a small average particle diameter are filled between particles having a large average particle diameter, a positive electrode having high rolling density may be prepared, and accordingly, an electrode having improved energy density per volume may be achieved.

The first lithium transition metal oxide and the second lithium transition metal oxide may have different compositions.

The first lithium transition metal oxide and the second lithium transition metal oxide may each include 70 mol% or more of nickel, for example, 80 mol% or more of nickel based on the total number of moles of transition metals excluding lithium. In this case, capacity per unit weight of the battery including the positive electrode active material prepared according to the present invention may be improved.

A difference between an amount of nickel included in the first lithium transition metal oxide and an amount of nickelincludedin the second lithium transition metal oxide may be 10 mol% or less, particularly 7 mol% or less, and more particularly 5 mol% or less. In a case in which the difference between the amount of nickel included in the first lithium transition metal oxide and the amount of nickel included in the second lithium transition metal oxide is within the above range, the safety of the battery including the positive electrode active material may be improved.

A difference between an amount of residual lithium present in the first lithium transition metal oxide and an amount of residual lithium present in the second lithium transition metal oxide may be 0.4 wt% or less, for example, 0.3 wt% or less. In this case, since the washing is uniformly performed when the first transition metal oxide and the second transition metal oxide are mixed and simultaneously washed, the surface uniformity of the prepared positive electrode active material may be ensured, and, as a result, a battery having improved high-temperature capacity characteristics, high-temperature resistance characteristics, and low-temperature output characteristics may be achieved.

A solvent of the washing solution may be at least one selected from deionized water, distilled water, ethanol, and an aqueous solution containing an organic acid(citric acid, malic acid, formic acid, acetic acid, oxalic acid, etc.) .The solvent of the washing solution may be specifically deionized water and/or distilled water. In this case, since dissolution of lithium is easy, it may be advantageous to remove the residual lithium present on the surface.

An amount (parts by weight) of the washing solution based on 100 parts by weight of the mixture may satisfy Equation 1 below. The amount (parts by weight) of the washing solution based on 100 parts by weight of the mixture may specifically satisfy Equation 2 below, and may more specifically satisfy Equation 3 below.

[Equation 1]

$$5{,}000 \times (x1w1 + x2w2) \le \text{the amount of the washing solution} \le 15{,}000 \times (x1w1 + x2w2)$$

In Equation 1,

x1 is the first BET specific surface area ($m^2/g$), and w1 is a weight ratio of the first lithium transition metal oxide based on a total weight of the mixture, and
x2 is the second BET specific surface area ($m^2/g$), and w2 is a weight ratio of the first lithium transition metal oxide based on the total weight of the mixture.

[Equation 2]

$$7{,}000 \times (x1w1 + x2w2) \le \text{the amount of the washing solution} \le 13{,}000 \times (x1w1 + x2w2)$$

[Equation 3]

$$9{,}000 \times (x1w1 + x2w2) \le \text{the amount of the washing solution} \le 11{,}000 \times (x1w1 + x2w2)$$

In Equations 2 and 3, x1, w1, x2, and w2 are the same as x1, w1, x2, and w2 in Equation 1.

In a case in which the amount of the washing solution is within the above range, impurities present in each of the first and second transition metal oxides may be removed without changing physical properties (e.g., surface structure) of the first and second transition metal oxides. In addition, a surface of the positive electrode active material may be protected while controlling some impurities required for coating. As a result, since the surface uniformity of the first and second transition metal oxides included in the prepared positive electrode active material may be ensured, the performance (high-temperature capacity characteristics, high-temperature resistance characteristics, low-temperature output characteristics, etc.) of the battery including the positive electrodeactive material may be improved. In a case in which the amount of the washing solution is less than 5,000 × (x1w1 + x2w2) parts by weight based on 100 parts by weight of the mixture, since the impurities are not removed, there is a problem in that residual lithium remains more than necessary, and, in a case in which the amount of the washing solution is greater than 15,000 × (x1w1 + x2w2) parts by weight based on 100 parts by weight of the mixture, the impurities may be entirely removed, but, since even lithium in the positive electrode active material may be dissolved in the washing solution, performance of the positive electrode active material may be degraded.

The washing may be performed in a temperature range of 5°C to 40°C, particularly 20°C to 30°C, and more particularly 20°C to 25°C. In addition, the washing may be performed for 5 minutes to 60 minutes, particularly 5 minutes to 40 minutes, and more particularly 10 minutes to 30 minutes, after all of the washing solution is added. In a case in which the temperature and time of a washing process are within the above ranges, only the residual lithium on the surface, which does not participate in a reaction, is removed, and dissolution of intercalated lithium may be suppressed as much as possible.

The first lithium transition metal oxide having the first BET specific surface area and the second lithium transition metal oxide having the second BET specific surface area each may be prepared by mixing a transition metal precursor and a lithium-containing raw material and then sintering the mixture.

Each of the precursor of the first transition metal oxide and the precursor of the second transition metal oxide may include 70 mol% or more of nickel, particularly, 80 mol% or more of nickel based on the total number of moles of the transition metals. In a case in which the amount of nickel included in each of the precursor of the first transition metal oxide and the precursor of the second transition metal oxide is within the above range, the capacity per unit weight of the battery including the positive electrode active material prepared by using the precursors may be improved.

A difference between an amount of nickel included in the precursor of the first lithium transition metal oxide and an amount of nickel included in the precursor of the second lithium transition metal oxide may be 10 mol% or less, particularly 7 mol% or less, and more particularly 5 mol% or less. In a case in which the difference between the amount of the nickel included in the precursor of the first lithium transition metal oxide and the amount of the nickel included in the precursor of the second lithium transition metal oxide is within the above range, the safety of the battery including the positive electrode active material prepared by using the precursors may be improved.

Each of the precursor of the first transition metal oxide and the precursor of the second transition metal oxide may be a transition metal hydroxide or a transition metal oxyhydroxide. Specifically, each of the precursor of the first transition metal oxide and the precursor of the second transition metal oxide may have a composition of Formula 1 or Formula 2 below.

[Formula 1] $[Ni_aCo_bM^1_cM^2_d](OH)_2$

[Formula 2] $[Ni_aCo_bM^1_cM^2_d]O \cdot OH$

In Formula 1 and Formula 2,

$M^1$ is at least one selected from manganese (Mn) and aluminum (Al),
$M^2$ is at least one selected from boron (B), magnesium (Mg), calcium (Ca), titanium (Ti), vanadium(V), chromium (Cr), iron (Fe), zinc (Zn), gallium (Ga), yttrium (Y), zirconium (Zr), niobium (Nb), molybdenum (Mo), tantalum (Ta), and tungsten (W), and
$0.7 \leq a < 1$, $0 < b < 0.3$, $0 < c < 0.3$, $0 \leq d \leq 0.1$, and $a+b+c+d=1$.
a represents an atomic fraction of nickel among metallic elements in the precursor, wherein a may satisfy $0.7 \leq a < 1$, $0.7 \leq a \leq 0.98$, or $0.7 \leq a \leq 0.95$.
b represents an atomic fraction of cobalt among the metallic elements in the precursor, wherein b may satisfy $0 < b < 0.3$, $0.01 \leq b < 0.3$, or $0.05 \leq b < 0.3$.
c represents an atomic fraction of an $M^1$ element among the metallic elements in the precursor, wherein c may satisfy $0 < c < 0.3$, $0.01 \leq c < 0.3$, or $0.05 \leq c < 0.3$.
d represents an atomic fraction of an $M^2$ element among the metallic elements in the precursor, wherein d may satisfy $0 \leq d \leq 0.1$ or $0 \leq d \leq 0.05$.

The lithium-containing raw material may be lithium-containing carbonates (e.g., lithium carbonate ($Li_2CO_3$), etc.), hydrates (e.g., lithium hydroxide hydrate ($LiOH \cdot H_2O$), etc.), hydroxides (e.g., lithium hydroxide, etc.), nitrates (e.g., lithium nitrate ($LiNO_3$), etc.), and chlorides (e.g., lithium chloride (LiCl), etc.). The lithium-containing raw material may specifically be $Li_2CO_3$ and/or LiOH. In this case, reactivity between the lithium-containing raw material and the precursor having a high atomic fraction of nickel among the metallic elements in the precursor may be improved. In consideration of a decomposition temperature of the lithium-containing raw material, the lithium-containing raw material may be preferably LiOH.

The precursor of the first or second transition metal oxide and the lithium-containing raw material may be mixed in a molar ratio of 1:0.9 to 1:1.2, particularly 1:0.95 to 1:1.15, and more particularly 1:1 to 1:1.1. In a case in which the lithium-containing raw material is mixed in a molar ratio of less than the above range, there is a concern that capacity of the positive electrode active material is reduced, and, in a case in which the lithium-containing raw material is mixed in a molar ratio of greater than the above range, unreacted lithium (Li) remains as a large amount of byproduct, and capacity reduction and separation of positive electrode active material particles (causing a positive electrode active material coalescence phenomenon) after sintering may occur.

When sintering after mixing the transition metal precursor and the lithium-containing raw material, the sintering may be performed in an oxygen atmosphere. Specifically, the sintering may be performed in an oxygen atmosphere having an oxygen concentration of 90vol% to 99.99vol%. The sintering may be more specifically performed in an oxygen atmosphere having an oxygen concentration of 97vol% to 99.99vol%. In this case, since the sintering proceeds while a high-concentration oxygen state is maintained, intercalation of lithium may occur well. Gas other than oxygen may be an inert gas such as nitrogen, helium, and argon.

The sintering may be performed in a temperature range of 700°C to 900°C, particularly 730°C to 870°C, and more particularly 750°C to 850°C. In a case in which the sintering temperature is within the above range, since the raw material is smoothly inserted into the particles due to the sufficient reaction, structural stability may be secured and optimal electrochemical properties may be simultaneously secured.

The sintering may be performed for 6 hours to 24 hours. The sintering may be specifically performed for 10 hours to 20 hours, for example, 10 hours to 15 hours. In a case in which the sintering time is within the above range, crystal growth of the lithium transition metal oxide may sufficiently occur without deviation (uniformly) for each sintering position.

**Step (B)**

The preparation method according to the present invention may further include a step of separating the mixture from the washing solution and drying the mixture.

The separation may be performed using a pressure-reducing filter having an average pore size of 1 um to 50 um. In this case, the lithium transition metal oxide may be separated from the washing solution in a short time.

The mixture separated from the washing solution may have a water content of 20% or less. In this case, the water content denotes a moisture content included in the mixture before drying after the separation from the washing solution, wherein it may be calculated according to Equation 1 below.

[Equation 1]

$$\text{Water content (\%)} = \{[(\text{mass of the mixture before drying}) - (\text{mass of the mixture after drying})]/(\text{mass of the mixture before drying})\} \times 100$$

In this case, the drying may be performed by drying the mixture separated from the washing solution at 130°C for 300 minutes.

In a case in which the water content is within the above range, a surface state, i.e., surface properties, may be uniformly controlled.

The drying process is a process for removing moisture from the mixture containing the moisture through the washing process, wherein, in order to remove the moisture as quickly as possible, after the moisture is removed by using a vacuum pump, drying may be performed in a temperature range of 30°C to 200°C, for example, 100°C to 150°C for 12 hours or more. The drying may be performed by a method such as hot air injection or vacuum drying.

**Step (C)**

The preparation method according to the present invention may further include a step of mixing a coating element-containing raw material with the mixture subjected to the washing and performing a heat treatment to form a coating layer, if necessary. Accordingly, a positive electrode active material, in which the coating layer is formed on the surface thereof, may be prepared.

A metallic element included in the coating element-containing raw material may be Zr, B, W, Mo, Cr, Nb, Mg, hafnium (Hf), Ta, lanthanum (La), Ti, strontium (Sr), barium (Ba), cerium (Ce), fluorine (F), phosphorus (P), sulfur (S), and Y. The coating element-containing raw material may be an acetic acid salt, nitrate, sulfate, halide, sulfide, hydroxide, oxide, or oxyhydroxide containing the metallic element. For example, in a case in which the metallic element is B, boric acid $(B(OH)_3)$ may be used.

The coating element-containing raw material may be included in a weight of 200 ppm to 10,000 ppm based on the dried lithium transition metal oxide. In a case in which the weight of the coating element-containing raw material is within the above range, capacity of the battery may be improved, and, since the coating layer formed may suppress a direct reaction between an electrolyte solution and the lithium transition metal oxide, long-term performance characteristics of the battery may be improved.

The heat treatment may be performed in a temperature range of 200°C to 700°C. In a case in which the heat treatment temperature is within the above range, a coating layer may be formed while maintaining structural stability of the lithium transition metal oxide.

The heat treatment may be performed for 1 hour to 10 hours. In a case in which the heat treatment time is within the above range, a suitable coating layer may be formed and production efficiency may be improved.

**Positive Electrode Active Material**

The present invention may provide a positive electrode active material prepared according to the above-described preparation method. Since the positive electrode active material prepared according to the present invention has excellent surface uniformity of the positive electrode active material, high-temperature capacity characteristics, high-temperature resistance characteristics, and low-temperature output characteristics of a battery including the same may be excellent.

The positive electrode active material includes the first lithium transition metal oxide and the second lithium transition metal oxide.

The first lithium transition metal oxide and the second lithium transition metal oxide may each have a composition represented by the following Formula 3.

$$[\text{Formula 3}] \qquad Li_e[Ni_{a'}Co_{b'}M^1_{c'}M^2_{d'}]O_{2-f}A_f$$

In Formula 3,

M$^1$ is at least one selected from Mn and Al,
M$^2$ is at least one selected from B, Mg, Ca, Si, Ti, V, Cr, Fe, Zn, Ga, Y, Zr, Nb, Mo, Ta, and W,
A is at least one selected from fluorine (F), chlorine (Cl), bromine (Br), iodine (I), astatine (At), sulfur (S), and selenium (Se), and
$0.9 \leq e \leq 0.1$, $0.7 \leq a' < 1$, $0 < b' < 0.3$, $0 < c' < 0.3$, $0 \leq d' \leq 0.1$, $a'+b'+c'+d'=1$, and $0 \leq f \leq 0.2$.
a' represents an atomic fraction of nickel among metallic elements other than lithium, wherein a' may satisfy $0.7 \leq a' < 1$, $0.7 \leq a' \leq 0.98$, or $0.7 \leq a' \leq 0.95$.
b' represents an atomic fraction of cobalt among the metallic elements other than lithium, wherein b' may satisfy $0 < b' < 0.3$, $0.01 \leq b' < 0.3$, or $0.05 \leq b' < 0.3$.
c' represents an atomic fraction of an M$^1$ element among the metallic elements other than lithium, wherein c' may satisfy $0 < c' < 0.3$, $0.01 \leq c' < 0.3$, or $0.05 \leq c' < 0.3$.
d' represents an atomic fraction of an M$^2$ element among the metallic elements other than lithium, wherein d' may satisfy $0 \leq d' \leq 0.1$ or $0 \leq d' \leq 0.05$.

Specifically, the first lithium transition metal oxide may have a composition represented by the following Formula 4, and the second lithium transition metal oxide may have a composition represented by the following Formula 5.

$$[\text{Formula 4}] \qquad Li_{x1}Ni_{a1}Co_{b1}Mn_{c1}Al_{d1}M_{e1}O_2$$

In Formula 1, M may be at least one selected from the group consisting of Zr, B, W, Mg, Ce, Hf, Ta, La, Ti, Sr, Ba, F, P, and S.

x1 represents a molar ratio of lithium in the first lithium transition metal oxide, wherein x1 may satisfy $0.90 \leq x1 \leq 1.2$, preferably $0.95 \leq x1 \leq 1.08$, and more preferably $1 \leq x1 \leq 1.08$.
a1 represents a molar ratio of nickel among metallic elements other than lithium in the first lithium transition metal oxide, wherein a1 may satisfy $0.85 \leq a1 \leq 0.95$ or $0.85 \leq a1 \leq 0.93$. In a case in which the amount of the nickel satisfies the above range, high capacity characteristics may be achieved.
b1 represents a molar ratio of cobalt among the metallic elements other than lithium in the first lithium transition metal oxide, wherein b1 may satisfy $0 < b1 < 0.15$, $0 < b1 \leq 0.12$, or $0.01 \leq b1 \leq 0.10$. The amount of the cobalt may vary depending on amounts of nickel, manganese, aluminum, and M. In a case in which the amount of the cobalt is excessively large, there is a problem in that cost of the raw material increases overall and reversible capacity is decreased, and, in a case in which the amount of the cobalt is excessively small, there is a problem in that it is difficult to simultaneously achieve sufficient rate capability and high powder density of the battery.

$c_1$ represents a molar ratio of manganese among the metallic elements other than lithium in the first lithium transition metal oxide, wherein $c_1$ may satisfy $0<c_1<0.15$, $0<c_1\leq0.12$, or $0.01\leq c_1\leq0.10$. In a case in which the amount of the manganese is excessively large, problems may occur in achieving high capacity, and, in a case in which the amount of the manganese is excessively small, there is a problem in that production costs increase.

$d_1$ represents a molar ratio of aluminum among the metallic elements other than lithium in the first lithium transition metal oxide, wherein $d_1$ may satisfy $0<d_1<0.10, 0<d_1\leq0.05$, or $0.01\leq d_1\leq0.05$. In a case in which the amount of the aluminum is excessively large, there is a problem in that resistance is increased, and, in a case in which the amount of the aluminum is excessively small, there is a problem in that the production costs increase.

$e_1$ represents a molar ratio of M among the metallic elements other than lithium in the first lithium transition metal oxide, wherein $e_1$ may satisfy $0\leq e_1\leq0.10$ or $0\leq e_1\leq0.05$.

$$[\text{Formula 5}] \qquad Li_{x2}Ni_{a2}Co_{b2}Mn_{c2}Al_{d2}M_{e2}O_2$$

In Formula 5, M may be at least one selected from the group consisting of Zr, B, W, Mg, Ce, Hf, Ta, La, Ti, Sr, Ba, F, P, and S.

$x_2$ represents a molar ratio of lithium in the second lithium transition metal oxide, wherein $x_2$ may satisfy $0.90\leq x_2\leq1.2$, preferably $0.95\leq x_2\leq1.08$, and more preferably $1\leq x_2\leq1.08$.

$a_2$ represents a molar ratio of nickel among metallic elements other than lithium in the second lithium transition metal oxide, wherein $a_2$ may satisfy $0.80\leq a_2\leq0.86$ or $0.80\leq a_2\leq0.85$. In a case in which the amount of the nickel satisfies the above range, high capacity characteristics may be achieved.

$b_2$ represents a molar ratio of cobalt among the metallic elements other than lithium in the second lithium transition metal oxide, wherein $b_2$ may satisfy $0<b_2<0.20$, $0<b_2\leq0.15$, or $0.01\leq b_2\leq0.10$. The amount of the cobalt may vary depending on amounts of nickel, manganese, aluminum, and M. In a case in which the amount of the cobalt is excessively large, there is a problem in that cost of the raw material increases overall and reversible capacity is decreased, and, in a case in which the amount of the cobalt is excessively small, there is a problem in that it is difficult to simultaneously achieve sufficient rate capability and high powder density of the battery.

$c_2$ represents a molar ratio of manganese among the metallic elements other than lithium in the second lithium transition metal oxide, wherein $c_2$ may satisfy $0<c_2<0.20$, $0<c_2\leq0.15$, or $0.01\leq c_2\leq0.10$. In a case in which the amount of the manganese is excessively large, problems may occur in achieving high capacity, and, in a case in which the amount of the manganese is excessively small, there is a problem in that production costs increase.

$d_2$ represents a molar ratio of aluminum among the metallic elements other than lithium in the second lithium transition metal oxide, wherein $d_2$ may satisfy $0<d_2<0.10, 0<d_2\leq0.05$, or $0.01\leq d_2\leq0.05$. In a case in which the amount of the aluminum is excessively large, there is a problem in that resistance is increased, and, in a case in which the amount of the aluminum is excessively small, there is a problem in that the production costs increase.

$e_2$ represents a molar ratio of M among the metallic elements other than lithium in the second lithium transition metal oxide, wherein $e_2$ may satisfy $0\leq e_2\leq0.10$ or $0\leq e_2\leq0.05$.

## Positive Electrode

The present invention may provide a positive electrode including the above-described positive electrode active material.

The positive electrode includes a positive electrode collector and a positive electrode active material layer formed on the positive electrode collector, wherein the positive electrode active material layer includes the positive electrode active material.

Since the positive electrode active material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, for example, 85 wt% to 98.5wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of0.1 wt% to 15wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca),or various copolymers thereof, and any one thereof or a mixture of two or more thereof may be used. The binder may be included in an amount of 0.1 wt% to 15wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

## Electrochemical Device

The present invention may provide an electrochemical device including the above-described positive electrode.

The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500pm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiOp(0<\beta<2)$, $SnO_2$, vanadium oxide, and lithium vanadium oxide; or a composite including the metallic material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 wt% or less, for example, 5wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, a battery module including the lithium secondary battery as a unit cell and a battery pack including the battery module may be provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery is not particularly limited, but a cylindrical type using a can, a prismatic type, a pouch type, or a coin type may be used.

The lithium secondary battery may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in more detail through specific examples.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

**Examples and Comparative Examples**

**Example 1**

A first transition metal precursor having an average particle diameter ($D_{50}$) of 10pm and a composition of $Ni_{0.88}Co_{0.05}Mn_{0.07}(OH)_2$, LiOH, and $Al_2O_3$ were mixed in a molar ratio of 1:1.07:0.02, and then sintered at 750°C for 10 hours in an oxygen atmosphere to prepare a first lithium transition metal oxide. The first lithium transition metal oxide had an average particle diameter ($D_{50}$) of 10pm, a composition of $Li_{1.00}Ni_{0.86}Co_{0.05}Mn_{0.07}Al_{0.02}O_2$, a BET specific surface area of 0.23 m$^2$/g, and a residual amount of lithium of 0.79 wt%.

A second transition metal precursor having an average particle diameter ($D_{50}$) of 5um and a composition of $Ni_{0.88}Co_{0.05}Mn_{0.07}(OH)_2$, LiOH, and $Al_2O_3$ were mixed in a molar ratio of 1:1.05:0.02, and then sintered at 710°C for 10 hours in an oxygen atmosphere to prepare a second lithium transition metal oxide. The second lithium transition metal oxide had an average particle diameter ($D_{50}$) of 5um, a composition of $Li_{1.00}Ni_{0.86}Co_{0.05}Mn_{0.07}Al_{0.02}O_2$, a BET specific surface area of 0.40 m$^2$/g, and a residual amount of lithium of 0.97wt%.

A difference between the BET specific surface area of the first lithium transition metal oxide and the BET specific surface area of the second lithium transition metal oxide was 0.17 m$^2$/g.

The first lithium transition metal oxide and the second lithium transition metal oxide were mixed in a weight ratio of 8:2 to prepare a mixture. 2,640 parts by weight (10,000 × (0.8×0.23 + 0.2×0.40)) of deionized water was added to the mixture based on 100 parts by weight of the mixture, and the mixture was washed at 25°C for 30 minutes. Thereafter, the mixture was subjected to a separation filter treatment from the washing solution (so that a water content of the separated mixture was less than 20%), and then dried at 110°C for 24 hours. Subsequently, the dry product dried above was mixed with $B(OH)_3$, as a coating raw material, in a molar ratio of 100:1 and heat-treated at 300°C to prepare a positive electrode active material on which a coating layer containing a boron element was formed.

### Example 2

A first lithium transition metal oxide was prepared in the same manner as in Example 1.

A second transition metal precursor having an average particle diameter ($D_{50}$) of 5um and a composition of $Ni_{0.83}Co_{0.05}Mn_{0.12}(OH)_2$, LiOH, and $Al_2O_3$ were mixed in a molar ratio of 1:1.05:0.02, and then sintered at 730°C for 10 hours in an oxygen atmosphere to prepare a second lithium transition metal oxide. The second lithium transition metal oxide had an average particle diameter ($D_{50}$) of 5um, a composition of $Li_{1.00}Ni_{0.81}Co_{0.05}Mn_{0.12}Al_{0.02}O_2$, a BET specific surface area of 0.55 m$^2$/g, and a residual amount of lithium of 0.91wt%.

A difference between the BET specific surface area of the first lithium transition metal oxide and the BET specific surface area of the second lithium transition metal oxide was 0.22 m$^2$/g.

The first lithium transition metal oxide and the second lithium transition metal oxide were mixed in a weight ratio of 8:2 to prepare a mixture. 2,940 parts by weight (10,000 × (0.8×0.23 + 0.2×0.55)) of deionized water was added to the mixture based on 100 parts by weight of the mixture, and the mixture was washed at 25°C for 30 minutes. Thereafter, the mixture was subjected to a separation filter treatment from the washing solution (so that a water content of the separated mixture was less than 20%), and then dried at 110°C for 24 hours. Subsequently, the dry product dried above was mixed with $B(OH)_3$, as a coating raw material, in a molar ratio of 100:1 and heat-treated at 300°C to prepare a positive electrode active material on which a coating layer containing a boron element was formed.

### Comparative Example 1

A first lithium transition metal oxide was prepared in the same manner as in Example 1. The first lithium transition metal oxide and deionized water were mixed in a weight ratio of 1:1 and then washed for 1 hour and 20 minutes. Thereafter, the first lithium transition metal oxide was subjected to a separation filter treatment from the washing solution, and then dried at 110°C for 24 hours. Subsequently, the dry product dried above was mixed with $B(OH)_3$, as a coating raw material, in a molar ratio of 100:1 and heat-treated at 300°C to prepare positive electrode active material I on which a coating layer containing a boron element was formed.

A second lithium transition metal oxide was prepared in the same manner as in Example 1. The second lithium transition metal oxide and deionized water were mixed in a weight ratio of 1:1 and then washed for 1 hour and 20 minutes. Thereafter, the second lithium transition metal oxide was subjected to a separation filter treatment from the washing solution, and then dried at 110°C for 24 hours. Subsequently, the dry product dried above was mixed with $B(OH)_3$, as a coating raw material, in a molar ratio of 100:1 and heat-treated at 300°C to prepare positive electrode active material II on which a coating layer containing a boron element was formed.

The positive electrode active material I and the positive electrode active material II were mixed in a weight ratio of 8:2 to prepare a positive electrode active material.

### Comparative Example 2

Positive electrode active material I was prepared in the same manner as in Comparative Example 1.

A second lithium transition metal oxide was prepared in the same manner as in Example 2. The second lithium transition metal oxide and deionized water were mixed in a weight ratio of 1:1 and then washed for 1 hour and 20 minutes.

Thereafter, the second lithium transition metal oxide was subjected to a separation filter treatment from the washing solution, and then dried at 110°C for 24 hours. Subsequently, the dry product dried above was mixed with $B(OH)_3$, as a coating raw material, in a molar ratio of 100:1 and heat-treated at 300°C to prepare positive electrode active material III on which a coating layer containing a boron element was formed.

The positive electrode active material I and the positive electrode active material III were mixed in a weight ratio of 8:2 to prepare a positive electrode active material.

## Comparative Example 3

A positive electrode active material was prepared in the same manner as in Example 1 except that 1,056 parts by weight (4,000 × (0.8×0.23 + 0.2×0.40)) of deionized water was added based on 100 parts by weight of the mixture during the washing of the mixture in Example 1.

## Comparative Example 4

A positive electrode active material was prepared in the same manner as in Example 1 except that 4,704 parts by weight (16,000 × (0.8×0.23 + 0.2×0.55))of deionized water was added based on 100 parts by weight of the mixture during the washing of the mixture in Example 2.

## Experimental Examples

### Experimental Example 1

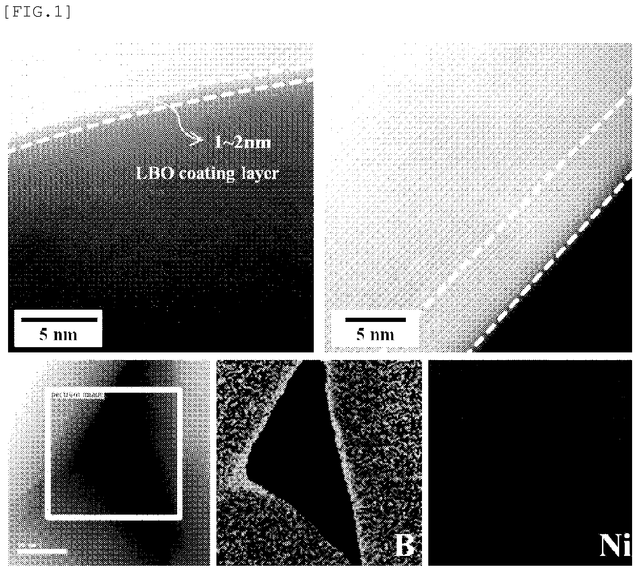

Transmission electron microscope (TEM)-energy dispersive X-ray spectroscopy (EDS) mapping data of the positive electrode active material prepared in Example 1 were obtained using a TEM (FEI Titan G2 80-200 ChemiSTEM), and the TEM-EDS mapping data are illustrated in FIG. 1.

### Experimental Example 2: Evaluation of Amount of Residual Lithium Present in the Positive Electrode Active Material

After 5 g of each of the positive electrode active materials of Examples 1 and 2 and Comparative Examples 1 to 4 was put in 100 g of distilled water and mixed for 5 minutes, filtering was performed. After the filtering, an amount of residual lithium dissolved in the distilled water was measured by titration (using 0.1 M HCl) using a pH meter, and the results thereof are presented in Table 1.

[Table 1]

|  | Amount of residual lithium (wt%) |
|---|---|
| Example 1 | 0.413 |
| Example 2 | 0.398 |
| Comparative Example 1 | 0.475 |
| Comparative Example 2 | 0.458 |
| Comparative Example 3 | 0.580 |
| Comparative Example 4 | 0.380 |

### Experimental Example3: Evaluation of High-temperature Capacity Retention and Resistance Increase Rate of Battery Including the Positive Electrode Active Material

Coin-type half-cells were prepared by using the positive electrode active materials prepared in Examples 1 and 2 and Comparative Examples 1 to 4, and capacity retention and resistance increase rate were evaluated for each cell.

Specifically, each of the positive electrode active materials prepared in Examples 1 and 2 and Comparative Examples 1 to 4, a carbon black conductive agent, and a PVdF binder were mixed in an NMP solvent at a weight ratio of 97.5:1.0:1.5 to prepare a positive electrode slurry. One surface of an aluminum current collector was coated with the positive electrode slurry, dried at 130°C, and then roll-pressed to prepare a positive electrode. A Li metal disk was used as a negative electrode. After an electrode assembly was prepared by disposing a separator between the positive electrode and negative electrode prepared as described above, a coin-type half-cell was prepared by disposing the electrode assembly in a battery case and then injecting an electrolyte solution into the case. In this case, as the electrolyte solution, an electrolyte solution, in which 1 M $LiPF_6$ was dissolved in an organic solvent of EC/EMC/DEC (3/3/4, vol%), was injected to prepare the cell.

A charge and discharge cycle was repeated 50 times at a constant current of 0.33C in a range of 3.0 V to 4.25V at 45°C to measure capacity and resistance of each battery, and, particularly, a ratio of 50th cycle capacity to 1st cycle capacity was set as a capacity retention, a ratio of DCIR obtained in a 50th discharge cycle to DCIR obtained in the first discharge cycle was set as a resistance increase rate, and the results thereof are presented in Table 2 below.

[Table 2]

|  | Capacity retention (%) | Resistance increase rate (%) |
|---|---|---|
| Example 1 | 96.8 | 60.4 |
| Example 2 | 97.6 | 59.5 |
| Comparative Example 1 | 91.8 | 122.8 |
| Comparative Example 2 | 96.9 | 84.6 |
| Comparative Example 3 | 96.1 | 85.9 |
| Comparative Example 4 | 94.8 | 63.8 |

**Experimental Example 4: Evaluation of Low-temperature Output of Battery Including the Positive Electrode Active Material**

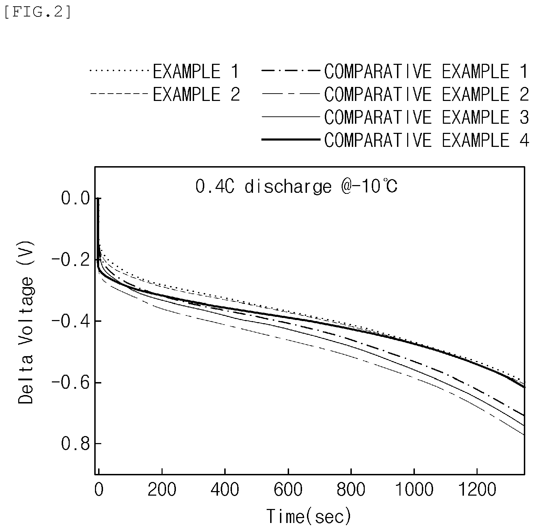

Each of the batteries prepared in Experimental Example 3 was charged to a state of charge (SOC) of 30, and, after each charged battery was put in a low-temperature chamber at -10°C and left standing for 2 hours, a voltage change rate at a low temperature was measured while continuously discharging the battery at a current of 0.4C for 1,300 seconds, and the results thereof are illustrated in FIG. 2.

Referring to FIG.1, it may be confirmed that surfaces of the particles of the positive electrode active material prepared in Example 1 were uniformly coated with a boron element. That is, since the surfaces of the particles of the positive electrode active material prepared in Example 1 were uniform, it may be confirmed that a coating layer was also uniformly formed.

In addition, referring to Table 1, with respect to the positive electrode active materials of Examples 1 and 2, it may be confirmed that amounts of residual lithium present were smaller than those of the positive electrode active materials of Comparative Examples 1 and 2. From this, after preparing two types of lithium transition metal oxides, in a case in which, after mixing the two types of the lithium transition metal oxides without washing each of the two types of the lithium transition metal oxides, washing was simultaneously performed with a specific amount of the washing solution which was related to the BET specific surface areas of the two types of the lithium transition metal oxides, it may be understood that residual lithium may be removed better. Also, with respect to the positive electrode active materials of Examples 1 and 2, it may be confirmed that the amounts of residual lithium present were smaller than that of the positive electrode active material of Comparative Example 3. With respect to Comparative Example 3, since the amount of the washing solution was less than $5,000 \times (x1w1 + x2w2)$ parts by weight based on 100 parts by weight of the mixture, impurities were not removed, and thus, it may be confirmed that residual lithium may remain more than necessary.

Furthermore, referring to Table 2, with respect to the batteries respectively including the positive electrode active materials of Examples 1 and 2, it may be confirmed that capacity retentions at a high temperature were better and resistance increase rates were smaller than those of the batteries respectively including the positive electrode active materials of Comparative Examples 1 to 4. With respect to the positive electrode active material of Comparative Example 3, since the amount of the washing solution was greater than $15,000 \times (x1w1 + x2w2)$ parts by weight based on 100 parts by weight of the mixture, even lithium in the positive electrode active material was dissolved in the washing solution, and thus, it may be confirmed that a problem occurred in which performance of the positive electrode active material was degraded.

In addition, referring to FIG. 2, with respect to the batteries respectively including the positive electrode active materials of Examples 1 and 2, it may be confirmed that output performances at a low temperature were better than those of the batteries respectively including the positive electrode active materials of Comparative Examples 1 to 4.

Additionally, with respect to Examples 1 and 2 in which the two types of the lithium transition metal oxides were mixed and then simultaneously washed according to the method of preparing a positive electrode active material of the present invention, since washing cost and washing time may be reduced, it may be understood that productivity may be improved.

**Claims**

1.  A method of preparing a positive electrode active material, the method comprising a step of:

    (A) mixing a first lithium transition metal oxide having a first Brunauer-Emmett-Teller (BET)specific surface area and a second lithium transition metal oxide having a second BET specific surface area to prepare a mixture and washing the mixture with a washing solution,

    wherein an amount (parts by weight) of the washing solution based on 100 parts by weight of the mixture satisfies Equation 1:

    [Equation 1]

    5,000 × (x1w1 + x2w2) ≤ the amount of the washing

    solution ≤ 15,000 × (x1w1 + x2w2)

    wherein, in Equation 1,

    x1 is the first BET specific surface area ($m^2/g$), and w1 is a weight ratio of the first lithium transition metal oxide based on a total weight of the mixture, and
    x2 is the second BET specific surface area ($m^2/g$), and w2 is a weight ratio of the first lithium transition metal oxide based on the total weight of the mixture.

2.  The method of claim 1, wherein a difference between the first BET specific surface area and the second BET specific surface area is 0.5 $m^2/g$ or less.

3.  The method of claim 1, wherein the first lithium transition metal oxide and the second lithium transition metal oxide have different average particle diameters ($D_{50}$).

4.  The method of claim 1, wherein the first lithium transition metal oxide and the second lithium transition metal oxide have different compositions.

5.  The method of claim 1, wherein the first lithium transition metal oxide and the second lithium transition metal oxide each comprises 70 mol% or more of nickel based on the total number of moles of transition metals.

6.  The method of claim 1, wherein the first lithium transition metal oxide and the second lithium transition metal oxide each have a composition of Formula 3.

    [Formula 3]     $Li_e[Ni_{a'}Co_{b'}M^1_{c'}M^2_{d'}]O_{2-f}A_f$

    wherein, in Formula 3,

    $M^1$ is at least one selected from manganese (Mn) and aluminum (Al),
    $M^2$ is at least one selected from boron (B), magnesium (Mg), calcium (Ca), titanium (Ti), vanadium(V), chromium (Cr), iron (Fe), zinc (Zn), gallium (Ga), yttrium (Y), zirconium (Zr), niobium (Nb), molybdenum (Mo), tantalum (Ta), and tungsten (W),
    A is at least one selected from fluorine (F), chlorine (Cl), bromine (Br), iodine (I), astatine (At), sulfur (S), and selenium (Se), and
    $0.9 \leq e \leq 0.1$, $0.7 \leq a' < 1$, $0 < b' < 0.3$, $0 < c' < 0.3$, $0 \leq d' \leq 0.1$, $a'+b'+c'+d'=1$, and $0 \leq f \leq 0.2$.

7.  The method of claim 1, wherein the first lithium transition metal oxide has a composition represented by Formula 4, and the second lithium transition metal oxide has a composition represented by Formula 5.

[Formula 4]     $Li_{x1}Ni_{a1}Co_{b1}Mn_{c1}Al_{d1}M_{e1}O_2$

wherein, in Formula 4, M is at least one selected from the group consisting of Zr, B, W, Mg, cerium (Ce), hafnium (Hf), Ta, lanthanum (La), Ti, strontium (Sr), barium (Ba), F, phosphorus (P), and S, and $0.90 \leq x1 \leq 1.1$, $0.85 \leq a1 \leq 0.95$, $0 < b1 < 0.15$, $0 < c1 < 0.15$, $0 < d1 \leq 0.10$, and $0 \leq e1 < 0.10$, and

[Formula 5]     $Li_{x2}Ni_{a2}Co_{b2}Mn_{c2}Al_{d2}M_{e2}O_2$

wherein, in Formula 5, M is at least one selected from the group consisting of Zr, B, W, Mg, Ce, Hf, Ta, La, Ti, Sr, Ba, F, P, and S, and $0.90 \leq x1 \leq 1.1$, $0.80 \leq a1 \leq 0.86$, $0 < b1 < 0.20$, $0 < c1 < 0.20$, $0 < d1 \leq 0.10$, and $0 \leq e1 < 0.10$.

8. The method of claim 1, wherein a difference between an amount of residual lithium present in the first lithium transition metal oxide and an amount of residual lithium present in the second lithium transition metal oxide is 0.4 wt% or less.

9. The method of claim 1, wherein the amount (parts by weight) of the washing solution based on 100 parts by weight of the mixture satisfies Equation 2:

```
[Equation 2]

7,000  ×  (x1w1 + x2w2)  ≤  the  amount  of  the  washing

solution ≤ 13,000 × (x1w1 + x2w2)
```

wherein, in Equation 2, x1, w1, x2, and w2 are a same as x1, w1, x2, and w2 in Equation 1.

10. The method of claim 1, wherein the amount (parts by weight) of the washing solution based on 100 parts by weight of the mixture satisfies Equation 3:

```
[Equation 3]

9,000  ×  (x1w1 + x2w2)  ≤  the  amount  of  the  washing

solution ≤ 11,000 × (x1w1 + x2w2)
```

wherein, in Equation 3, x1, w1, x2, and w2 are a same as x1, w1, x2, and w2 in Equation 1.

11. The method of claim 1, wherein the washing is performed in a temperature range of 5°C to 40°C.

12. The method of claim 1, wherein the washing is performed for 5 minutes to 60 minutes.

13. The method of claim 1, further comprising a step of (B) separating the mixture from the washing solution and drying the mixture,
wherein the mixture separated from the washing solution has a water content of 20% or less.

14. The method of claim 1, further comprising a step of (C) mixing a coating element-containing raw material with the mixture subjected to the washing and performing a heat treatment to form a coating layer.

15. The method of claim 14, wherein the coating element is at least one selected from the group consisting of Zr, B, W, Mo, Cr, Nb, Mg, Hf, Ta, La, Ti, Sr, Ba, Ce, F, P, S, and Y.

[FIG.1]

[FIG.2]

························EXAMPLE 1　　—·—·—COMPARATIVE EXAMPLE 1
- - - - - -EXAMPLE 2　　— - —COMPARATIVE EXAMPLE 2
　　　　　　　　　　　—————COMPARATIVE EXAMPLE 3
　　　　　　　　　　—————COMPARATIVE EXAMPLE 4

0.4C discharge @-10℃

| **INTERNATIONAL SEARCH REPORT** | International application No. |
|---|---|
| | **PCT/KR2021/019764** |

| **A.** | **CLASSIFICATION OF SUBJECT MATTER** |
|---|---|
| | **C01G 53/00**(2006.01)i; **H01M 4/525**(2010.01)i; **H01M 4/505**(2010.01)i |

According to International Patent Classification (IPC) or to both national classification and IPC

| **B.** | **FIELDS SEARCHED** |
|---|---|

Minimum documentation searched (classification system followed by classification symbols)

C01G 53/00(2006.01); H01M 10/052(2010.01); H01M 10/0525(2010.01); H01M 4/131(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(cathode material), 비표면적(specific surface area), 리튬 전이금속 산화물(lithium transition metal oxide), 수세(wash)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2019-0133601 A (SAMSUNG SDI CO., LTD.) 03 December 2019 (2019-12-03)<br>See claims 1-11; and example 1. | 1-15 |
| A | KR 10-2020-0031305 A (LG CHEM, LTD.) 24 March 2020 (2020-03-24)<br>See entire document. | 1-15 |
| A | KR 10-2019-0133594 A (SAMSUNG SDI CO., LTD.) 03 December 2019 (2019-12-03)<br>See entire document. | 1-15 |
| A | KR 10-1970909 B1 (TODA KOGYO CORP.) 19 April 2019 (2019-04-19)<br>See entire document. | 1-15 |
| A | KR 10-2018-0027261 A (SAMSUNG SDI CO., LTD.) 14 March 2018 (2018-03-14)<br>See entire document. | 1-15 |

| ☐ Further documents are listed in the continuation of Box C. | ☑ See patent family annex. |
|---|---|

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2022** | **11 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/019764**

| Patent document cited in search report | | | Publication date (day/month/year) | Patent family member(s) | | | Publication date (day/month/year) |
|---|---|---|---|---|---|---|---|
| KR | 10-2019-0133601 | A | 03 December 2019 | CN | 110534700 | A | 03 December 2019 |
| | | | | EP | 3573148 | A1 | 27 November 2019 |
| | | | | KR | 10-2238557 | B1 | 09 April 2021 |
| | | | | US | 2019-0363358 | A1 | 28 November 2019 |
| KR | 10-2020-0031305 | A | 24 March 2020 | CN | 112368239 | A | 12 February 2021 |
| | | | | EP | 3795541 | A1 | 24 March 2021 |
| | | | | EP | 3795541 | A4 | 28 July 2021 |
| | | | | JP | 2021-536098 | A | 23 December 2021 |
| | | | | KR | 10-2306547 | B1 | 30 September 2021 |
| | | | | US | 2021-0265615 | A1 | 26 August 2021 |
| | | | | WO | 2020-055198 | A1 | 19 March 2020 |
| KR | 10-2019-0133594 | A | 03 December 2019 | CN | 110534700 | A | 03 December 2019 |
| | | | | EP | 3573148 | A1 | 27 November 2019 |
| | | | | KR | 10-2019-0133601 | A | 03 December 2019 |
| | | | | KR | 10-2238557 | B1 | 09 April 2021 |
| | | | | US | 2019-0363358 | A1 | 28 November 2019 |
| KR | 10-1970909 | B1 | 19 April 2019 | CN | 102239118 | A | 09 November 2011 |
| | | | | CN | 102239118 | B | 09 November 2016 |
| | | | | EP | 2368851 | A1 | 28 September 2011 |
| | | | | EP | 2368851 | B1 | 16 May 2018 |
| | | | | JP | 2010-155775 | A | 15 July 2010 |
| | | | | JP | 2016-084279 | A | 19 May 2016 |
| | | | | JP | 2017-200875 | A | 09 November 2017 |
| | | | | JP | 6380608 | B2 | 29 August 2018 |
| | | | | KR | 10-2011-0094023 | A | 19 August 2011 |
| | | | | KR | 10-2017-0106519 | A | 20 September 2017 |
| | | | | US | 2011-0281168 | A1 | 17 November 2011 |
| | | | | US | 9455444 | B2 | 27 September 2016 |
| | | | | WO | 2010-064440 | A1 | 10 June 2010 |
| KR | 10-2018-0027261 | A | 14 March 2018 | CN | 109661740 | A | 19 April 2019 |
| | | | | EP | 3512011 | A1 | 17 July 2019 |
| | | | | EP | 3512011 | A4 | 13 May 2020 |
| | | | | KR | 10-2021-0088491 | A | 14 July 2021 |
| | | | | KR | 10-2358675 | B1 | 08 February 2022 |
| | | | | US | 10826064 | B2 | 03 November 2020 |
| | | | | US | 2019-0181445 | A1 | 13 June 2019 |
| | | | | WO | 2018-048155 | A1 | 15 March 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200181553